# NEW EUROPEAN PATENT SPECIFICATION

(11) **EP 2 050 651 B2**
(45) Date of publication and mention of the opposition decision: **11.09.2019**
(45) Mention of the grant of the patent: 19.05.2010
(21) Application number: 08164776.0
(22) Date of filing: 22.09.2008
(51) Int. Cl.: B62B 3/06, B62D 51/00, B62D 51/04, B66F 9/06

(54) **A tiller arm for a tiller arm truck**
Deichsel für einen Deichselförderwagen
Timon pour chariot industriel

(30) Priority: 18.10.2007 SE 0702329
(43) Date of publication of application: 22.04.2009
(73) Proprietor: BT Products AB, 595 81 Mjölby (SE)
(72) Inventor: Post, Per-Ola, 595 53 MJÖLBY (SE)
(74) Representative: Zacco Sweden AB

(56) References cited:
- EP-A- 1 238 896
- DE-A1- 2 447 859
- DE-A1- 3 725 908
- DE-A1- 3 832 581
- DE-A1-102006 001 689

## Description

### TECHNICAL FIELD

The present invention relates to the field of industrial trucks, especially the field of industrial tiller trucks. Within this field it is known to use a tiller arm for operating the industrial truck. The tiller arm is normally used in two applications; when the operator walks behind the industrial truck as well as when the operator rides the industrial truck on a platform.

### BACKGROUND ART

Within the industrial tiller truck field it is known to use tiller arms with means for adjusting the tiller arms. Such a tiller arm is described in document EP1238896 B1. The described tiller arm has two joints where one can be turned into snap lock positions for different settings of its condition. The lower joint is thus apparently movable. The tiller arm is contemplated to be curved when a user rides a platform that is attached to the industrial truck chassis. Further the document DE 10 2006 001 689 A1 discloses a tiller arm according to the preamble of claim 1 and claim 4.

### PROBLEM

For the user of a tiller arm in accordance with the known art, the upper joint is lockable, by means of snap positions and pins, in a plurality of positions. In order to provide a simpler solution for locking both the upper and the lower joint, a simple and robust solution is needed. Another problem is that one wants to be able to lock the lower joint when using a platform for the user.

### SUMMARY OF THE INVENTION

In order to solve any one of the problems stated above, the following solutions with embodiments according to below are suggested.

In accordance with the invention is provided an industrial truck tiller arm in accordance to claims 1 and 4.

The effect of the above is that one and the same means is used for locking the joints. This simplifies handling and manufacture. It implies that the user need mechanically act on one means only. Another effect is that both the first and the second joint may be locked.

In accordance with the embodiment according to claim 1 a tiller arm for a tiller arm industrial truck is provided, where the locking means is comprised of a sleeve that is movable along the tiller arm, wherein the sleeve is adapted such that when it in a first locking position at least partially encloses the first joint this joint is locked and when the sleeve in a second locking position at least partially encloses the second joint this joint is locked.

This has the effect that the user intuitively can see how the locking means works. Thereby, it is simpler for the user to use it in a correct manner. The locking means is easy to manufacture and maintain. Furthermore, the design is safe and reliable.

In accordance with another embodiment a tiller arm for a tiller arm industrial truck is provided, which is adapted so that if the sleeve is brought to a third locking position the sleeve is arranged to at least partially enclose both joints, and thus locking of said joints is obtained.

This has the effect that the tiller arm does not become loose when one changes from locking one of the joints to locking the other joint and vice versa.

In accordance with another embodiment a tiller arm for a tiller arm industrial truck is provided, where the length of the sleeve is adapted so that only one joint at a time can be at least partially enclosed, and thereby only one joint at a time at a certain moment can be locked.

This has the effect that the tiller arm need not be straight when change between locking of the first or the second joint takes place.

In accordance with an embodiment according to claim 4 a tiller arm for a tiller arm industrial truck is provided, where the locking means is comprised of a movable rod, such that when the rod in a first locking position engages the first joint the first is locked and when the rod in a second locking position engages the second joint the second joint is locked, wherein said rod is arranged inside the tiller arm and further two holes are arranged in the respective joint, into which holes the rod is adapted to be introduced for engaging the respective joint.

The effect of arranging the rod inside the tiller arm is that the rod does not disturb the use of the tiller arm, simplified cleaning and good locking means protection is also achieved.

In accordance with another embodiment a tiller arm for a tiller arm industrial truck is provided, which tiller arm is arranged such that if the rod is brought to a third locking position, simultaneous engagement with the holes in the respective joint is obtained and thereby locking of both joints.

This has the effect that the tiller arm does not become loose when one changes from locking one of the joints to locking the other joint and vice versa.

In accordance with another embodiment a tiller arm for a tiller arm industrial truck is provided, where the length of the rod is adapted such that the holes of the respective joint cannot engage the rod at the same time.

This has the effect that change between locking of the respective joint can be performed in a smooth and easy manner.

Further advantages will become apparent from the detailed description which refers to the figures as below.

### BRIEF DESCRIPTION OF THE DRAWINGS

- Figure 1: shows an embodiment with a sleeve for locking where the first joint is locked.
- Figure 2: shows an embodiment with a sleeve where the second joint is locked.
- Figure 3: shows an embodiment with a rod inside the tiller arm, the lowermost condition shows a cross-section through the tiller arm.

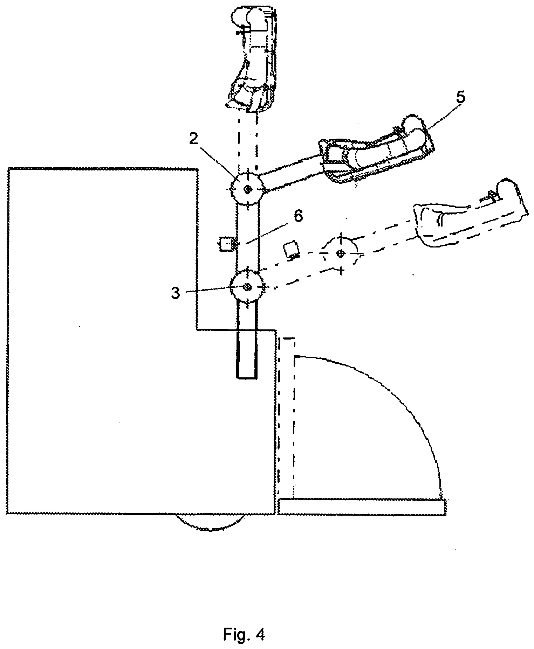

- Figure 4: shows an embodiment with rod inside the tiller arm on a schematically illustrates industrial truck with a platform.

### DESCRIPTION OF EMBODIMENTS

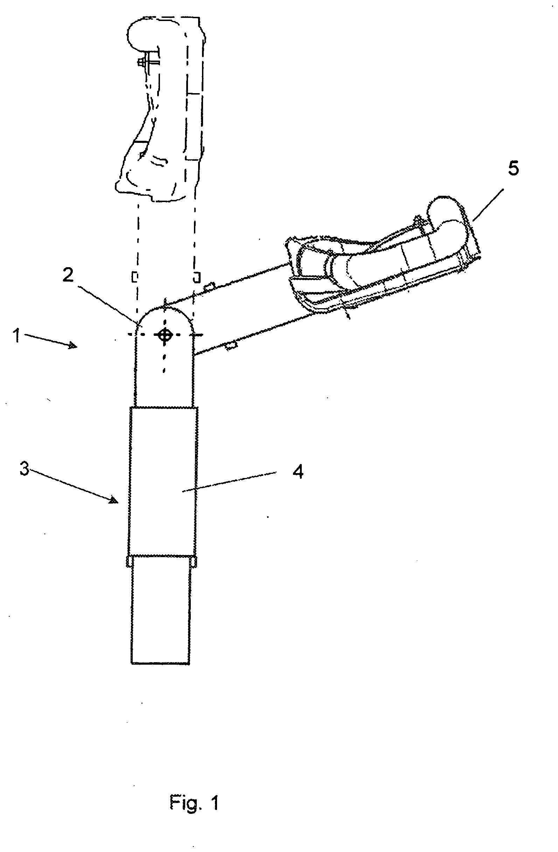

In a preferred embodiment shown in figure 1 a tiller arm 1 with a first joint 2 and a second joint 3 (hidden in figure 1) is shown. The joints 2, 3 are pivotal in an essentially common plane. The plane is essentially vertical for an industrial truck that is essentially horizontally arranged. The joints 2, 3 entail that the tiller arm 1 can change geometrical form. A locking means in the form of a sleeve 4 surrounds the tiller arm 1 and in figure 1 the sleeve encloses, and thereby locks, the second joint 3. The cross-section of the sleeve 4 is suitably of a form that corresponds to the form of the outer housing of the tiller arm 1. In accordance with a preferred embodiment the sleeve 4 has a length that is adapted so that both joints are locked in the central position of the sleeve. This is effected by at least partial enclosure of the respective joint. In the respective end positions, only one of the joints 2, 3 is locked.

In accordance with another embodiment the sleeve 4 has a length that is matched so that both joints 2, 3 cannot be locked at the same time. This means that it is so short that at least partial enclosure of the joints is not allowed at the same time.

In another embodiment, which is not shown, the locking means is constituted by a sheet embracing only three sides of the tiller arm 1 and with one side completely open. In accordance with this embodiment the sheet runs in grooves that make it possible to displace it and hold it in a position for locking.

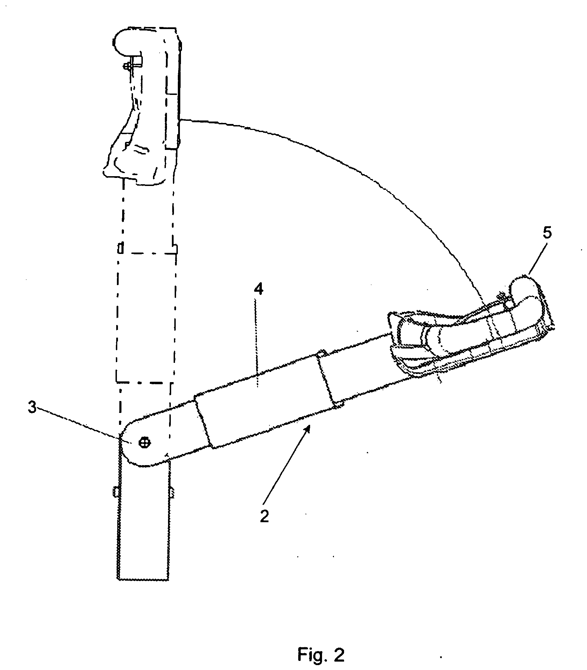

In figure 2 the tiller arm 1 of figure 1 is shown with the first joint 2 locked. Thus, in this case the sleeve 4 has been displaced along the tiller arm in direction towards the handle for locking the first joint 2. The sleeve is in or adjacent to the end position in direction towards the handle.

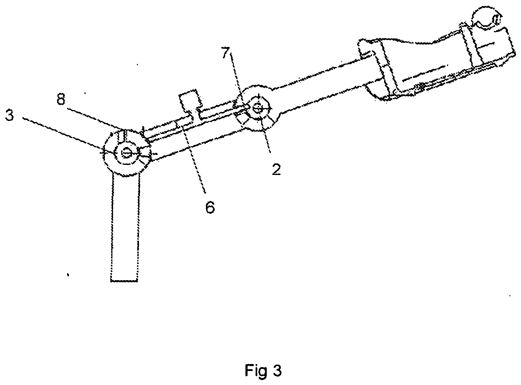

Figure 3 shows another preferred embodiment, where the locking means is constituted by a rod 6 which is arranged within the tiller arm. The rod can be comprised of a solid rod, but can also be replaced by a hollow bar in the form of a tube. Furthermore the cross-section of the bar may also be of angular shape, or the like. The bar can be guided to-and-fro along the longitudinal direction of the tiller arm. It may thus be introduced into a hole 7 in the first joint, which is shown in figure 3. If the rod engages the hole 7, the first joint 2 is locked. If the rod is pushed in the opposed direction it is introduced into a hole 8 of the second joint 3 of the tiller arm, thereby this joint 3 is locked. In accordance with the preferred embodiment, the bar 6 has a length such that in a central position between the joints 2, 3, both joints are locked through engagement with both holes 7, 8.

In accordance with another embodiment the rod has a length which is adapted is such a way that the hole 7 of the first joint and the hole 8 of the second joint cannot engage the rod 6 at the same time. Thereby, only one joint can be locked at a certain moment.

It is to be appreciated that in accordance with all embodiments, the joint that is not locked is movable.

Other embodiments are incorporated within the scope of the enclosed patent claims.

## Claims

1. A tiller arm (1) for a tiller arm industrial truck comprising a first joint (2) and a second joint (3), which are pivotally arranged in an essentially common plane, so that the tiller arm (1) can change geometrical shape in said plane, wherein a locking means is adjustable to a first position for locking said first joint (2) and a second position for locking said second joint (3), **characterised in that** the locking means is comprised of a sleeve (4) that is movable along the tiller arm (1), wherein the sleeve (4) is adapted such that when it in a first locking position at least partially encloses the first joint (2) the first joint (2) is locked and when the sleeve (4) in a second locking position at least partially encloses the second joint (3) the second joint (3) is locked.

2. A tiller arm (1) for a tiller arm industrial truck according to claim 1, arranged such that if the sleeve (4) is brought to a third locking position the sleeve (4) is arranged to at least partially enclose both joints (2, 3), and thus locking of said joints (2, 3) is obtained.

3. A tiller arm (1) for a tiller arm industrial truck according to claim 1, where the length of the sleeve (4) is adapted so that only one joint (2, 3) at a time can be at least partially enclosed, and thereby only one joint (2, 3) at a time at a certain moment can be locked.

4. A tiller arm (1) for a tiller arm industrial truck comprising a first joint (2) and a second joint (3), which are pivotally arranged in an essentially common plane, so that the tiller arm (1) can change geometrical shape in said plane, wherein a locking means is adjustable to a first position for locking said first joint (2) and a second position for locking said second joint (3), **characterised in that** the locking means is comprised of a movable rod (6), such that when the rod (6) in a first locking position engages the first joint (2) the first joint is locked and when the rod (6) in a second locking position engages the second joint (3) the second joint (3) is locked, wherein said rod (6) is arranged inside the tiller arm (1) and further two holes are arranged in the respective joint (2, 3), into which hole (7, 8) the rod (6) is adapted to be introduced for engaging the respective joint (2, 3).

5. A tiller arm (1) for a tiller arm industrial truck according to claim 4, arranged such that if the rod (6) is brought to a third locking position, simultaneous engagement with the hole (7, 8) in the respective joint (2, 3) is obtained and thereby locking of both joints (2, 3).

6. A tiller arm (1) for a tiller arm industrial truck according to claim 4, where the length of the rod (6) is adapted such that the hole (7, 8) of the respective joint (2, 3) cannot engage the rod (6) at the same time.

## Patentansprüche

1. Deichsel (1) für ein Deichsel-Flurförderzeug mit einem ersten Gelenk (2) und einem zweiten Gelenk (3), die in einer im Wesentlichen gemeinsamen Ebene drehbar angeordnet sind, so dass die Deichsel (1) ihre geometrische Form in dieser Ebene ändern kann, wobei dass eine Arretierungseinrichtung in eine erste Stellung zum Arretieren des ersten Gelenks (2) und in eine zweite Stellung zum Arretieren des zweiten Gelenks (3) einstellbar ist, **dadurch gekennzeichnet, dass**, bei der die Arretierungseinrichtung eine Hülse (4) umfasst, die entlang der Deichsel (1) beweglich ist, wobei die Hülse (4) so angepasst ist, dass, wenn sie in einer ersten Arretierungsstellung das erste Gelenk (2) zumindest teilweise umschließt, das erste Gelenk (2) arretiert ist, und wenn die Hülse (4) in einer zweiten Arretierungsstellung das zweite Gelenk (3) zumindest teilweise umschließt, das zweite Gelenk (3) arretiert ist.

2. Deichsel (1) für ein Deichsel-Flurförderzeug nach Anspruch 1, die so angeordnet ist, dass, wenn die Hülse (4) in eine dritte Arretierungsstellung gebracht worden ist, die Hülse (4) so angeordnet ist, dass sie beide Gelenke (2, 3) zumindest teilweise umschließt und folglich eine Arretierung der Gelenke (2, 3) erreicht wird.

3. Deichsel (1) für ein Deichsel-Flurförderzeug nach Anspruch 1, bei der die Länge der Hülse (4) so angepasst ist, dass jeweils nur ein Gelenk (2, 3) zumindest teilweise umschlossen werden kann und dadurch jeweils nur ein Gelenk (2, 3) zu einem bestimmten Zeitpunkt arretiert sein kann.

4. Deichsel (1) für ein Deichsel-Flurförderzeug mit einem ersten Gelenk (2) und einem zweiten Gelenk (3), die in einer im Wesentlichen gemeinsamen Ebene drehbar angeordnet sind, so dass die Deichsel (1) ihre geometrische Form in dieser Ebene ändern kann, wobei dass eine Arretierungseinrichtung in eine erste Stellung zum Arretieren des ersten Gelenks (2) und in eine zweite Stellung zum Arretieren des zweiten Gelenks (3) einstellbar ist, **dadurch gekennzeichnet, dass**, bei der die Arretierungseinrichtung eine bewegliche Stange (6) umfasst, so dass, wenn die Stange (6) in einer ersten Arretierungsstellung mit dem ersten Gelenk (2) in Eingriff ist, das erste Gelenk arretiert ist, und wenn die Stange (6) in einer zweiten Arretierungsstellung mit dem zweiten Gelenk (3) in Eingriff ist, das zweite Gelenk (3) arretiert ist, wobei der die Stange (6) im Innern der Deichsel (1) angeordnet ist und ferner in den jeweiligen Gelenken (2, 3) zwei Löcher angeordnet sind, wobei die Stange (6) entsprechend angepasst ist, um in die Löcher (7, 8) eingeführt zu werden, um mit dem jeweiligen Gelenk (2, 3) in Eingriff zu treten.

5. Deichsel (1) für ein Deichsel-Flurförderzeug nach Anspruch 4, die so angeordnet ist, dass, wenn die Stange (6) in eine dritte Arretierungsstellung gebracht worden ist, ein gleichzeitiger Eingriff mit dem Loch (7, 8) im jeweiligen Gelenk (2, 3) erfolgt ist und beide Gelenke (2, 3) dadurch arretiert sind.

6. Deichsel (1) für ein Deichsel-Flurförderzeug nach Anspruch 4, bei der die Länge der Stange (6) so angepasst ist, dass das Loch (7, 8) des jeweiligen Gelenks (2, 3) nicht gleichzeitig mit der Stange (6) in Eingriff treten kann.

## Revendications

1. Timon (1) pour chariot industriel à timon comprenant une première articulation (2) et une seconde articulation (3), qui sont ménagées à pivotement dans un plan essentiellement commun, de sorte que le timon (1) puisse changer de forme géométrique dans ledit plan, dans lequel un moyen de verrouillage est ajustable dans une première position pour verrouiller ladite première articulation (2) et dans une deuxième position pour verrouiller ladite seconde articulation (3), **caractérisé en ce que** le moyen de verrouillage est constitué d'un manchon (4) qui peut se déplacer le long du timon (1), dans lequel le manchon (4) est adapté pour que, lorsque, dans une première position de verrouillage, il enserre au moins en partie la première articulation (2), la première articulation (2) soit verrouillée et que, lorsque le manchon (4) dans une deuxième de verrouillage enserre au moins en partie la seconde articulation (3), la seconde articulation (3) soit verrouillée.

2. Timon (1) pour chariot industriel à timon selon la revendication 1, aménagé pour que, si le manchon (4) est amené dans une troisième position de verrouillage, le manchon (4) soit aménagé pour au moins enserrer partiellement les deux articulations (2, 3) et on obtient par suite le verrouillage desdites articulations (2, 3).

3. Timon (1) pour chariot industriel à timon selon la revendication 1, dans lequel la longueur du manchon (4) est adaptée de sorte que seule une articulation (2, 3) à la fois puisse être au moins en partie enserrée et que, par suite, seule une articulation (2, 3) à la fois puisse être verrouillée à un certain moment.

4. Timon (1) pour chariot industriel à timon comprenant une première articulation (2) et une seconde articulation (3), qui sont ménagées à pivotement dans un plan essentiellement commun, de sorte que le timon (1) puisse changer de forme géométrique dans ledit plan, dans lequel un moyen de verrouillage est ajustable dans une première position pour verrouiller ladite première articulation (2) et dans une deuxième position pour verrouiller ladite seconde articulation (3), **caractérisé en ce que** dans lequel le moyen de verrouillage est constitué d'une tige mobile (6), telle que, lorsque la tige (6) dans une première position de verrouillage s'engage sur la première articulation (2), la première articulation soit verrouillée et que, lorsque la tige (6) dans une deuxième position de verrouillage s'engage sur la seconde articulation (3), la seconde articulation (3) soit verrouillée, dans lequel ladite tige (6) est aménagée à l'intérieur du timon (1) et en outre deux trous sont ménagés dans l'articulation respective (2, 3), dans lequel trou (7, 8) la tige (6) est adaptée pour être introduite afin de s'engager sur l'articulation respective (2, 3).

5. Timon (1) pour chariot industriel à timon selon la revendication 4, aménagé de sorte que, si la tige (6) est amenée dans une troisième position de verrouillage, un engagement simultané avec le trou (7, 8) dans l'articulation respective (2, 3) soit obtenu et, par suite, le verrouillage des deux articulations (2, 3).

6. Timon (1) pour chariot industriel à timon selon la revendication 4, dans lequel la longueur de la tige (6) est adaptée de sorte que le trou (7, 8) de l'articulation respective (2, 3) ne puisse s'engager sur la tige (6) en même temps.
